# EUROPÄISCHE PATENTANMELDUNG

(11) **EP 1 382 553 A1**
(43) Veröffentlichungstag der Anmeldung: **21.01.2004**
(21) Anmeldenummer: 02013359.1
(22) Anmeldetag: 19.06.2002
(51) Int. Cl.: B65G 47/31

(54) **Vereinzelungsförderer**

(71) Anmelder: Siemens Schweiz AG, 8047 Zürich (CH)
(72) Erfinder: Maier, Wilhelm, 5430 Wettingen (CH)
(74) Vertreter: Fischer, Michael, Dr.

(57) **Zusammenfassung**

Erfindungsgemäss sind eine Vorrichtung (12,12',30,48) und ein Verfahren zur Vereinzelung von einem mit zufälliger Verteilung auf einem ersten Förderabschnitt (2) in einer ersten Förderrichtung (f1) herangeführten Strom (19) von Stückgütern (14,16,18), vorgesehen, wobei dem ersten Förderabschnitt (2) ein zweiter Förderabschnitt (4) nachgeschaltet ist:
a) der Strom (19) von Stückgütern (14,16,18) ist mittels des zweiten Förderabschnitts (4) umlenkbar und folgt einer zweiten Förderrichtung (f2), die in einem ersten Winkel zur ersten Förderrichtung (f1) verläuft;
b) der Strom (19) von Stückgütern (14,16,18) ist im zweiten Förderabschnitt (4) in einen von der Lage der Stückgüter (14,16,18) am Ende des ersten Förderabschnitts (2) abhängigen mindestens zweiteiligen Strom (20,22,24), unterteilbar, wobei
c) der umlenkungsnahe Teilstrom (20) mit einem ersten Fördermittel (4a) in zweiter Förderrichtung (f2) förderbar ist, und
d) der umlenkungsferne Teilstrom (24) mit einem zweiten Fördermittel (4b) in ersten Förderrichtung (f1) und anschliessend mit einem dritten Fördermittel (4c) in zweiter Förderrichtung (f2) gefördert wird.

## Beschreibung

Die Erfindung bezieht sich auf eine Vorrichtung und ein Verfahren zur Vereinzelung von einem Strom von Stückgütern, die mit zufälliger Verteilung auf einem ersten Förderabschnitt in einer ersten Förderrichtung herangeführt werden.

Um heutzutage Stückgüter, wie Postversandstücke, Päckchen, Pakete, Warensendungen aller Art und dergleichen, zumindest auch kostendeckend von einem Absender an einen Adressaten zuzustellen, ist ein vergleichsweise hoher logistischer Aufwand innerhalb einer ganzen logistischen Transportkette erforderlich. Einerseits sind die Stückgüter auf eine möglichst effiziente Weise einzusammeln und andererseits ist natürlich auch deren abschliessende Auslieferung mit einem hohen Mass an logistisch richtiger Planung verbunden.

Als Zwischenglied in dieser logistischen Transportkette kommt den sogenannten Verteilzentren eine Schlüsselposition zu. In einem derartigen Verteilzentrum werden die Stückgüter angeliefert und - sofern nicht bereits vorher geschehen - mit einer maschinenlesbaren Adresscodierung versehen und nachfolgend mittels eines Sortierförders den gewünschten Zieldestinationen zugeordnet. Es ist daher eigentlich selbsterklärend, dass bei dem derzeitig gerade aufgrund der zunehmenden Bestellungen von Waren über das Internet steigenden Stückgüteraufkommen in derartigen Verteilzentren mit einem möglichst hohen Automatisierungsgrad gearbeitet werden muss, um hinsichtlich der Lieferzeit und der Kostendeckung die hohen Anforderungen erfüllen zu können.

Dabei ist es für die Erreichung des hohen geforderten Automatisierungsgrades unerlässlich, dass die Stückgüter mehr oder weniger ungeordnet entladen und anschliessend mit einem Sortierförderer zur gewünschten Zielstelle gefördert werden können. Bei diesem Förder- und Sortierprozess ist unerlässlich, dass die Stückgüter definiert auf die einzelnen Transportwagen des Sortierförderers aufgegeben und ebenso definert auch wieder an den Zielstellen entladen werden können. Im besonderen für die definierte Beladung des Sortierförderers mit den Stückgüter ist es eine notwendige Voraussetzung, dass diese Stückgüter entgegen ihrer vollkommen chaotischen Verteilung (nach dem Ausladen) vor der Aufgabe auf den Sortierförderer in separierter Form vorliegen um sicherstellen zu können, dass nun genau dieses oder jenes Stückgut auf diesen oder jenen freien Transportwagen aufgegeben und wegsortiert werden kann.

Zur Separierung der Stückgüter sind daher bereits eine ganze Reihe von Singulator-Lösungen bekannt, die jedoch alle nicht voll zufriedenstellend sind, und sei es nur insofern, dass das Preis/Leistungsverhältnis für verbesserungswürdig und/oder die technische Ausführung für vereinfachungswürdig gehalten wird. Auch ist häufig der Einsatzbereich für einen bestimmten Typ von Singulator in Abhängigkeit von der Homogenität (der Abmessungen) oder besser von der Inhomogenität (der Abmessungen) der zu vereinzelnden Stückgüter sehr begrenzt.

Beispielhaft wird eine in der EP 0 780 328 A1 offenbarte Vereinzelungseinrichtung genannt, die hintereinander angeordnete Sektionen mit angetriebenen, schräg zu einer Leitwand ausgerichteten Rollen aufweist. Die Geschwindigkeiten der Rollen steigen von Sektion zu Sektion, um Zwischenräume zwischen den Paketen zu erzeugen. Dabei wird der Transportpfad für die Pakete von Sektion zu Sektion schmaler, damit nur einzelne Pakete die Einrichtung verlassen. Die Pakete, die in den Sektionen über die offenen Leisten ausgesondert werden, gelangen über einen Rückführungspfad wieder auf den Transportpfad mit den Sektionen. Diese Lösung benötigt viel Platz, insbesondere in der Länge, und garantiert bei unterschiedlich grossen Paketen keine sichere Vereinzelung, da auch zwei nebeneinanderliegende schmale Pakete den Vereinzeler passieren können.

In der US 5,638,938 wird eine weitere Vereinzelungseinrichtung für Pakete beschrieben, bei der mehrere jeweils separat angetriebene ansteigende Transportbänder hintereinander angeordnet sind, wobei die Pakete vom oberen Teil des vorherigen Bandes auf den unteren Teil des nächsten Bandes fallen. Zwischen den Bändern sind Lichtschranken angeordnet. Befinden sich Pakete innerhalb einer Lichtschranke, so wird der Antrieb des jeweils vorgelagerten Bandes ausgeschaltet. Auf diese Weise wird der Paketpulk in Transportrichtung auseinandergezogen. Da es hierbei aber möglich ist, dass Pakete nebeneinander liegen, sind noch Finger vorgesehen, die gesteuert durch die Signale eines quer zur Transportrichtung angeordneten optischen Zeilensensors nur ein Paket von mehreren nebeneinanderliegenden Paketen durchlassen. Diese Lösung benötigt ebenfalls eine grosse Baulänge und eine sichere Funktion auch bei Paketen stark unterschiedlicher Grösse (insbesondere die Funktion der Finger bei vergleichsweise schweren Stückgüter) ist nicht gewährleistet.

Eine weitere technisch hinsichtlich des Vereinzelungsergebnisses vollstens zufriedenstellende Lösung kann dem europäischen Patent 1 105 327 entnommen werden. Der dort offenbarte Vereinzeler umfasst ein Erkennungsfeld, auf welches die Pakete in ungeordneter Folge gefördert werden. Mit Erreichen des Endes des Erkennungsfeldes von dem zuvorderst liegenden Paket werden die in dem Erkennungsfeld liegenden Paket mit separat ansteuerbaren Stösselelementen von dem laufenden Transportband abgehoben und aufgrund einer vorgenommenen optische Lageanalyse anschliessend wieder separat so abgesenkt, dass jeweils nur ein Paket ohne Behinderung durch die jeweils anderen noch auf den aufgestellten Stösselelementen lagernden Paketen von den Transportbänder weitergefördert wird bis das letzte Paket das Erkennungsfeld verlassen hat und dieses wieder neu beschickt werden kann. Es ist leicht erkennbar, dass zur vollautomatisierten Steuerung dieses Vereinzelungsvorganges eine nicht-triviale Software erforderlich ist und auch die erforderlichen Komponenten zur Image-Erkennung und zur separaten Betätigung der Stösselelement vergleichsweise teuer sind. Des weiteren stellt diese Vorgehensweise ein diskontinuierliches Verfahren dar, weil das Erkennungsfeld immer erst neu beschickt wird, wenn alle Stückgüter wieder abtransportiert worden sind. Damit sind neben dem überragenden Vereinzelungsergebnis möglicherweise Einbussen bei der Durchsatzrate hinzunehmen.

Aus diesen vorstehend genannten Gründen liegt daher der Erfindung die Aufgabe zugrunde, eine Vorrichtung und ein Verfahren zur Vereinzelung von Stückgütern anzugeben, die es erlauben, die Vereinzelung von Stückgütern in technisch einfacher und kostengünstiger Weise mit hohem Durchsatz zu ermöglichen, und zwar auch dann, wenn die Abmessungen und Gewichte der zu sortierenden Stückgüter innerhalb weiter Grenzen liegen dürfen.

Diese Aufgabe wird bezüglich der Vorrichtung der eingangs genannten Art erfindungsgemäss dadurch gelöst, dass dem ersten Förderabschnitt ein zweiter Förderabschnitt mit folgenden Eigenschaften nachgeschaltet ist:
a) der Strom von Stückgütern ist auf dem zweiten Förderabschnitt umlenkbar und folgt spätestens am Ende des zweiten Förderabschnitts einer zweiten Förderrichtung, die in einem ersten Winkel zur ersten Förderrichtung verläuft;
b) der Strom von Stückgütern ist im zweiten Förderabschnitt in einen von der Lage der Stückgüter am Ende des ersten Förderabschnitts abhängigen mindestens zweiteiligen Strom, d.h. mindestens in einen umlenkungsnahen Teilstrom und einen umlenkungsfernen Teilstrom, unterteilbar;
c) der umlenkungsnahe Teilstrom ist mit einem ersten Fördermittel, welches eine erste Breite und eine erste Länge aufweist und in zweiter Förderrichtung fördert, förderbar; und
d) der umlenkungsferne Teilstrom ist mit einem zweiten Fördermittel, dessen Länge etwa der ersten Breite des ersten Fördermittels entspricht und in erster Förderrichtung fördert, und anschliessend mit einem dritten Fördermittel, dessen Länge und Breite etwa der ersten Länge und der ersten Breite des ersten Fördermittels entspricht und in zweiter Förderrichtung fördert, förderbar.

Bezüglich des Verfahren der eingangs genannten Art wird diese Aufgabe erfindungsgemäss dadurch gelöst, dass
a) der auf dem ersten Förderabschnitt herangeführte Strom von Stückgütern auf einem zweiten Förderabschnitt umgelenkt wird und spätestens am Ende des zweiten Förderabschnitts in einer zweiten Förderrichtung, die in einem ersten Winkel zur ersten Förderrichtung verläuft, gefördert wird;
b) der Strom von Stückgütern wird im zweiten Förderabschnitt in einen von der Lage der Stückgüter am Ende des ersten Förderabschnitts abhängigen mindestens zweiteiligen Strom, d.h. mindestens in einen umlenkungsnahen Teilstrom und einen umlenkungsfernen Teilstrom, unterteilt;
c) der umlenkungsnahe Teilstrom wird auf einer Innenbahn in die zweite Förderrichtung gefördert; und
d) der umlenkungsferne Teilstrom wird auf einer die Innenbahn umgebenden Aussenbahn in am Ende zweiter Förderrichtung gefördert, wobei der Anteil der vektoriellen Förderung auf der Aussenbahn in Richtung der zweiten Förderrichtung in etwa gleich demjenigen Anteil auf der Innenbahn ist.

Aufgrund dieser Ausgestaltung ermöglicht es die Vorrichtung, den ankommenden Stückgutstrom in eine geeignete Anzahl von Teilströme zu zerlegen und so im besonderen nebeneinander liegende Stückgüter gleich auch innerhalb eines Teilstroms infolge der Umlenkung hintereinander liegend anzuordnen. Damit ist es zudem möglich, auch einen Stückgutstrom mit einer sehr inhomogenen Grössen-und Gewichtsverteilung auf einer sehr kurzen Wegdistanz so auseinanderzuziehen, dass die Stückgüter den zweiten Förderabschnitt in vereinzelter Weise verlassen.

Um den Abzug der Stückgüter beim Übergang vom Ende des ersten Förderabschnitts zum Beginn des zweiten Förderabschnitts zu verbessern, umfasst der erste Förderabschnitt ein Transportband, welches in erster Förderrichtung gesehen aufsteigend verläuft. So ist es gewährleistet, dass ein Stückgut erst nach dem Übergang seines Massenschwerpunktes auf dem zweiten Förderabschnitt aufliegt und dann aber massgeblich der Förderrichtung und -geschwindigkeit des zweiten Förderabschnitts folgt.

Um den Abzug der Stückgüter von zweiten Förderabschnitt besonders gut herbeiführen zu können, ist es eine geeignete Massnahme, die Fördermittel des zweiten Förderabschnitts, welche in Richtung der zweiten Förderrichtung fördern, in zweiter Förderrichtung gesehen abfallend verlaufen zu lassen. Damit wird es für die Weiterförderung der Stückgüter möglich, diese gleich mit Auftreffen der zuvorderst geförderten Kante in den Einflussbereich der zu weiteren Sortierung vorgesehenen nachgeschalteten Fördermittel zu bringen.

Zur weiteren Entflechtung des anfänglich chaotischen Verbundes der Stückgüter können die verschiedenen Fördermittel mit unterschiedlichen Geschwindigkeiten fördern, wobei die Geschwindigkeiten vorzugsweise in Förderrichtung gesehen zunehmend sind. Damit wird es besser möglich, den für die Vereinzelung der Stückgüter erforderlich Raum zwischen zwei Stückgutteilen zu schaffen.

Um beispielsweise annähernd in die erste Förderrichtung zurückzukehren und/oder um möglicherweise immer noch vergleichsweise nah nebeneinander liegende Stückgüter weiter zu vereinzeln, kann es zweckmässig sein, dem zweiten Förderabschnitt einen dritten Förderabschnitt nachzuschalten, welcher Fördermittel aufweist, die den mindestens zweiteiligen Strom der Stückgüter aufnehmen und in einer dritten Förderrichtung, die im Winkel zur zweiten Förderrichtung verläuft, fördern.

Die Vereinzelung der Stückgüter mit dem Übergang zum dritten Förderabschnitt wird weiter vereinfacht, wenn auch bei diesem Übergang (wie schon beim Übergang vom ersten zum zweiten Förderabschnitt) die Fördermittel des dritten Förderabschnitts mit einer gegenüber dem zweiten Förderabschnitt erhöhten Geschwindigkeit fördern.

Um den Gewinn an erreichter Separierung infolge der Unterteilung des ursprünglich ankommenden Stückgutstroms im dritten Förderabschnitt nicht aufgeben zu müssen, kann es vorgesehen sein, dass die Fördermittel des dritten Förderabschnitts eine der Anzahl der Teilströme entsprechende Anzahl von separaten Fördermitteln zur separaten Förderung der Teilströme aufweisen. Dabei kann es zweckmässig sein, dass die separaten Fördermittel über Steuermittel verfügen, mittels derer die separaten Fördermittel individuell antreibbar sind und somit auch mit unterschiedlicher Geschwindigkeit betrieben werden können. Dieses Merkmal erlaubt es zudem in den Vereinzelungsprozess aktiv eingreifen zu können, falls beispielsweise ein vergleichsweise kleines Stückgutteil eines Teilstroms direkt neben einem vergleichsweise grossen Stückgutteil eines oder des benachbarten Teilstroms gefordert wird. Es sei allerdings angemerkt, dass hierfür nun erstmals zusätzliche Mess-, Steuer- und Antriebselemente erforderlich sind, was bei der bisherigen etwas salopp gesprochen passiven Separierung nicht erforderlich gewesen ist. Weiter perfektionieren lässt sich die "aktive" Separierung in diesem Förderabschnitt noch, wenn die separaten Fördermittel jeweils in mindestens zwei Abschnitte unterteilt sind, die jeweils individuell antreibbar sind. Dieser Abschnitt könnte somit zugleich als Einschussband für die Aufgabe der separierten Stückgüter auf die Transportwagen eines Sortierförderers dienen. Dieser Sortierförder könnte dabei vorzugsweise im Winkel zur dritten Förderrichtung verlaufen, so dass die Stückgüter bei dem Einschuss bereits eine Geschwindigkeitskomponente in der Förderrichtung des Sortierförderers aufweisen.

Alternativ oder ergänzend zu dem Vorangesagten kann dem dritten Förderabschnitt ein vierter Förderabschnitt nachgeschaltet sein, der im wesentlichen in gleicher Förderrichtung wie die dritte Förderrichtung fördert, und über einen Querantrieb verfügt, der die über die Breite des vierten Förderabschnitts verteilt zugeführten Stückgüter zu einer Seitenkante des vierten Förderabschnitts fördert. Auf diese Weise werden die Stückgüter auf diesem Förderabschnitt in eine einer Perlenkette ähnliche Reihe aufgereiht und können anschliessend definiert hinsichtlich ihres Ziels erfasst und nachfolgend wegsortiert werden.

Alternativ zu dem Vorausgesagten kann dem dritten Förderabschnitt ein vierter Förderabschnitt nachgeschaltet sein, der in einer vierten Förderrichtung, die im Winkel zur dritten Förderrichtung verläuft, fördert. Dabei kann die Fördergeschwindigkeit im vierten Förderabschnitt gegenüber dem dritten Förderabschnitt mindestens gleich oder höher sein. Damit stellt dieser vierte Förderabschnitt eine Art weitere Kaskade innerhalb des Systems dar um möglicherweise aufgrund besonders unglücklicher Umstände immer noch zu dicht beieinanderliegende Stückgüter trennen zu können. Zugleich gibt dieser vierte Sortierabschnitt die Möglichkeit die mit dem zweiten Sortierabschnitt vorgenommene Umlenkung der Stückgüter wieder umzukehren.

Folgerichtig kann dann dem vierten Förderabschnitt auch noch ein fünfter Förderabschnitt nachgeschaltet sein, der in einer fünften Förderrichtung, die im Winkel zur vierten Förderrichtung verläuft, fördert. Damit kann erreicht werden, dass die Stückgüter nun wieder genau in der Richtung der ersten Förderrichtung transportiert werden, nur dass sie nun in voneinander separierter Form und mit höherer Geschwindigkeit transportiert werden. Damit bilden bei dieser Ausführungvariante der zweite, der dritte und der vierte Sortierabschnitt eine Art "Vereinzelungstopf", zu dem auch wieder beiträgt, dass die Fördergeschwindigkeit im fünften Förderabschnitt gegenüber dem vierten Förderabschnitt mindestens gleich gross oder höher ist.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: in schematischer Darstellung eine Aufsicht auf eine fünf Förderabschnitte aufweisende Vereinzelungsvorrichtung für einen Stückgutsortier;
- Figur 2: in schematischer Darstellung eine seitliche Ansicht der Vereinzelungsvorrichtung gemäss Figur 1;
- Figur 3: in schematischer Darstellung eine weitere seitliche Ansicht der Vereinzelungsvorrichtung gemäss Figur 1;
- Figur 4: in schematischer Darstellung eine Aufsicht auf eine gegenüber Figur 1 geringfügig modizierte Vereinzelungsvorrichtung mit zugehörigem Höhenprofil;
- Figur 5: in schematischer Darstellung eine Aufsicht auf die Vereinzelungsvorrichtung gemäss Figur 4 mit modifiziertem dritten Förderabschnitt;
- Figur 6: in schematischer Darstellung eine Aufsicht auf die Vereinzelungsvorrichtung gemäss Figur 4 mit einem modifizierten Endabschnitt;
- Figur 7: in schematischer Darstellung eine Aufsicht auf die Vereinzelungsvorrichtung gemäss den Figuren 1 und 4 mit einem weiteren modifizierten Endabschnitt; und
- Figur 8: in schematischer Darstellung eine Aufsicht auf die Vereinzelungsvorrichtung gemäss Figur 4 mit einem nochmals modifizierten Endabschnitt.

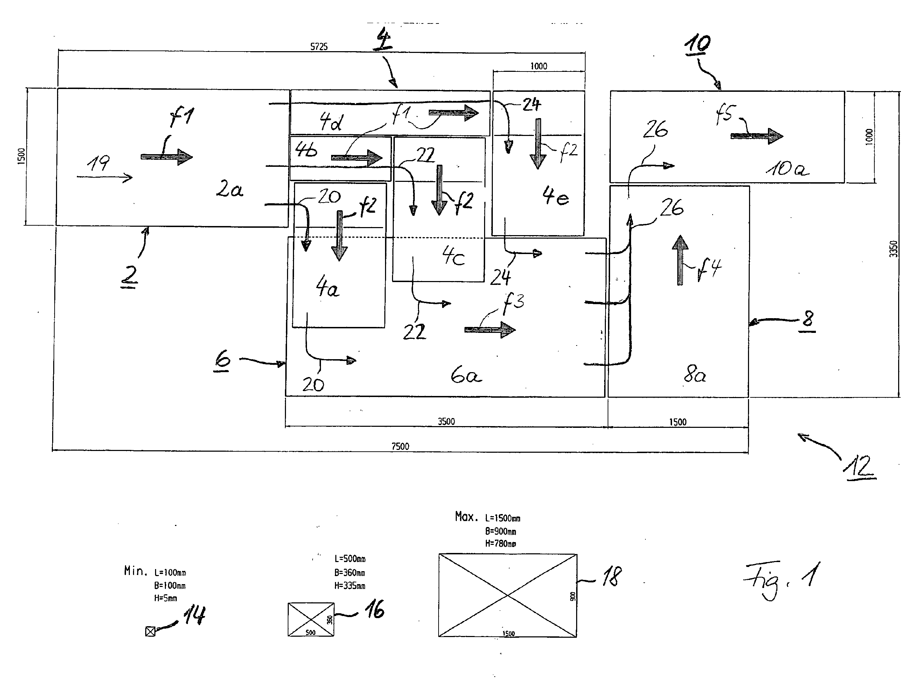

Figur 1 zeigt in schematischer Darstellung eine Aufsicht auf eine fünf Förderabschnitte 2, 4, 6, 8 und 10 aufweisende Vereinzelungsvorrichtung 12, die Bestandteil eines hier nicht weiter dargestellten Sortierförderers für Stückgut 14, 16, 18 ist. Der Sortierförderer ist dabei hinsichtlich der Abmessungen der zu sortierenden Stückgüter 14, 16, 18 sehr grosszügig (beispielsweise entsprechend den Anforderung der Deutschen Post AG) ausgelegt, so dass Stückgüter 14, 16, 18 mit einer Länge L von 100 bis 1500 mm, mit einer Breite B von 100 bis 900 mm und mit einer Höhe H von 5 bis 780 mm sortiert werden können. Dabei repräsentieren die Stückgüter 14 und 18 den Fall minimal bzw. maximal zulässiger Abmessungen. Das Stückgut 16 entspricht mit seinen Abmessungen der durchschnittlichen Stückgutgrösse (L = 500 mm, B = 360 mm, H = 780 mm).

Zu einer weitgehend vollautomatisierten Aufgabe der Stückgüter 14 bis 18 auf den Sortierförderer, der in der Regel aus einzelnen Transportwagen mit seitlich kippbaren Schalen oder mit seitlich antreibbaren Querbändern besteht, ist daher die Aufgabe der Vereinzelungsvorrichtung eminent wichtig. Ein mit zufälliger Verteilung auf dem ersten Förderabschnitt 2 mit einem Förderband 2a in einer ersten Förderrichtung f1 herangeführten Strom 19 von Stückgütern unterschiedlicher Grösse und Gewicht, wie durch die Stückgüter 14 bis 18 repräsentiert, muss so behandelt werden, dass die Stückgüter zur ihrer separaten Aufgabe auf den Sortierförderer in ausreichendem Masse einzeln handhabbar sind.

Hierzu ist es nun im Einzelnen vorgesehen, dass dem ersten Förderabschnitt 2 ein zweiter Förderabschnitt 4 nachgeschaltet ist, bei dem der Strom der Stückgüter in eine zweite Förderrichtung f2 umgelenkt wird und dabei spätestens am Ende des zweiten Förderabschnitts 4 diese zweite Förderrichtung f2, die etwa senkrecht zur ersten Förderrichtung f1 verläuft, aufweist. Weiter ist es vorgesehen, dass der Strom von Stückgütern im zweiten Förderabschnitt 4 in einen von der Lage der Stückgüter am Ende des ersten Förderabschnitts 2 abhängigen im Ausführungsbeispiel dreiteiligen Strom, d.h. in einen umlenkungsnahen Teilstrom 20, einen mittleren Teilstrom 22 und einen umlenkungsfernen Teilstrom 24, unterteilt wird.

Dabei wird der umlenkungsnahe Teilstrom 20 sofort mit einem ersten Förderband 4a in die zweite Förderrichtung umgelenkt und mit gegenüber der Fördergeschwindigkeit v1 des Förderbandes 2a erhöhter Fördergeschwindigkeit v2 transportiert.

Der mittlere Teilstrom 22 wird ähnlich wie die Laufspuren einer Leichtathletiklaufbahn wie eine Aussenbahn zuerst mit einem zweiten Förderband 4b (auch schon mit Fördergeschwindigkeit v2) und nachfolgend mit einem dritten Förderband 4c (jetzt in zweiter Förderrichtung f2) um den umlenkungsnahen Teilstrom 20 (Innenbahn) herumgeführt. Wie der Figur 1 leicht entnommen werden kann, ist das zweite Förderband 4b etwa so lang wie das erste Förderband 4a breit ist und das dritte Förderband 4c ist hinsichtlich seiner Länge und Breite im wesentlichen den Abmessungen des ersten Förderbandes 4a nachgebildet.

Der umlenkungsferne Teilstrom 24 belegt hier nun die äusserste "Aussenbahn" und wird zuerst mit einem vierten Förderband 4d (auch schon mit Fördergeschwindigkeit v2) und nachfolgend mit einem fünften Förderband 4e (jetzt in zweiter Förderrichtung f2) um den umlenkungsnahen Teilstrom 20 und den mittleren Teilstrom 22 herumgeführt. Wie auch hier der Figur 1 leicht entnommen werden kann, ist das vierte Förderband 4d etwa so lang wie das erste Förderband 4a und das dritte Förderband 4c zusammen breit sind und das fünfte Förderband 4e ist hinsichtlich seiner Länge und Breite im wesentlichen den Abmessungen des ersten Förderbandes 4a und dritten Förderbandes 4c nachgebildet.

Auf diese Weise gelingt es trotz dieser vergleichsweise einfachen Anordnung der verschiedenen Fördermittel auf dem ersten Förderabschnitt 2 noch nebeneinander liegende Stückgüter zum einen entweder gleich in unterschiedliche Teilströme 20, 22, 24 zu unterteilen oder infolge der nachfolgenden Umlenkung aus der ersten Förderrichtung f1 in die zweite Förderrichtung f2 in eine hintereinander liegende Reihe zu überführen und die Stückgüter 14, 16, 18 somit separat handhabbar zu machen.

In weiterer Ausgestaltung der Vereinzelungsvorrichtung 12 schliesst sich an den zweiten Förderabschnitt 4 ein dritter Förderabschnitt 6 an, der in diesem Ausführungsbeispiel ein Förderband 6a aufweist, dass unterhalb der Mündungsseiten des ersten Förderbandes 4a, des dritten Förderbandes 4c und des fünften Förderbandes 4e im wesentlichen rechtwinklig zur zweiten Förderrichtung f2 mit einer dritten Förderrichtung f3 verläuft. Die Fördergeschwindigkeit v3 dieses dritten Förderabschnitts 6 entspricht in etwa der Geschwindigkeit des zweiten Förderabschnitts 4 oder liegt leicht darüber. Auf diesem dritten Förderabschnitt 6 erfolgt eine weitgehend separierte Weiterförderung der Teilströme 20, 22, 24, wobei auch die hier vorgenommene nochmalige Umlenkung die Hintereinanderaufreihung von ggfs. immer noch nebeneinander liegenden Stückgüter herbeiführt.

Im vorliegenden Ausführungsbeispiels schliessen sich an diesen dritten Sortierabschnitt 6 noch ein vierter Sortierabschnitt 8 und ein fünfter Sortierabschnitt 10 an. Mittels des vierten Sortierabschnitts 8 werden die Teilströme 20, 22, 24 wieder zu einem Strom 26 vereinigt, wobei auch hier wieder eine Umlenkung um etwa 90° in eine vierte Förderrichtung f4 vorgenommen wird. Dabei liegt die Geschwindigkeit des Förderbandes 8a des vierten Förderabschnitts 8 wieder zumindest gleich hoch wie die Fördergeschwindigkeit v3 des dritten Förderabschnitts 6, so dass aufgrund der fortschreitenden Steigerung der Fördergeschwindigkeit eine in Förderrichtung zunehmende Entzerrung des anfänglich chaotischen Stroms 19 von Stückgütern 14, 16, 18 erzielt ist. Dabei stellen im besonderen die Umlenkungen sicher, dass die Stückgüter mehr und mehr vereinzelt werden und sich zum Teil sogar selbst vereinzeln.

Beispielhaft sei diese Selbstvereinzelung für einen Fall erläutert, bei dem das Stückgut 18 (maximale Abmessungen) in dem Teilstrom 20 geführt ist und vom Förderband 6a auf das Förderband 8a gefördert wird. Im Ergebnis ist nach dem Umschwenken dieses grossen Stückguts 18 der Weg auf das Förderband 8a für Stückgüter in den Teilströmen 22 und 24 vorübergehend gesperrt. Somit werden diese erst nach dem Passieren des Stückguts 18 weitergefördert und liegen somit in Förderrichtung gesehen eindeutig hinter dem Stückgut 18.

Betrachtet man nun auch noch den entgegengesetzten Fall, bei dem das Stückgut 18 in dem Teilstrom 24 geführt ist und beim Übertritt vom dritten Förderabschnitt 6 auf den vierten Förderabschnitt 8 auf eine anderes Stückgut trifft, so wird dieses Stückgut zunächst vom Stückgut 18 in die dritte Förderrichtung gedrückt und zugleich vom Förderband 8a in die Förderrichtung gefördert. Der resultierende
Orts/Geschwindigkeitsvektor für dieses Stückgut weist daher in eine zu den Förderrichtungen f3 und f4 diagonale Richtung, so dass dieses vom Stückgut 18 verschobene Stückgut den fünften Förderabschnitt 10 signifikant vor dem Stückgut 18 erreicht, womit auch hier die erwünschte Separierung der Stückgüter spätestens zu diesem Zeitpunkt erreicht ist.

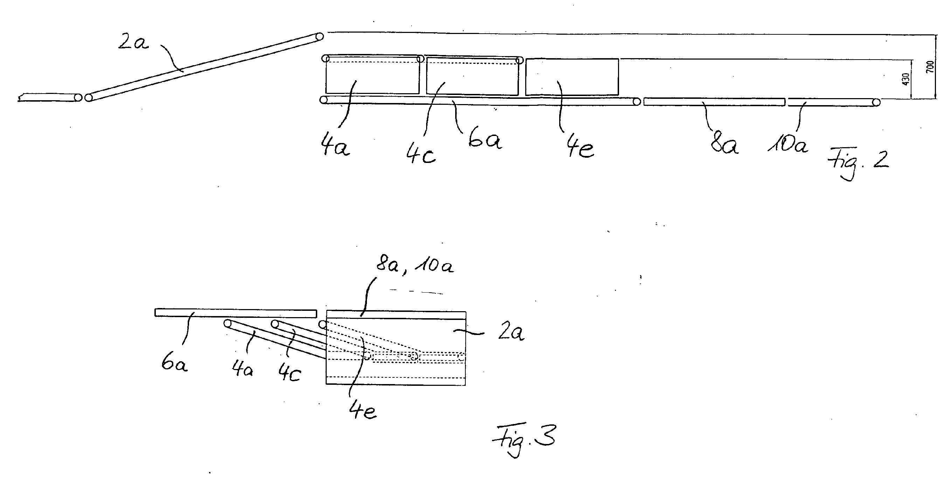

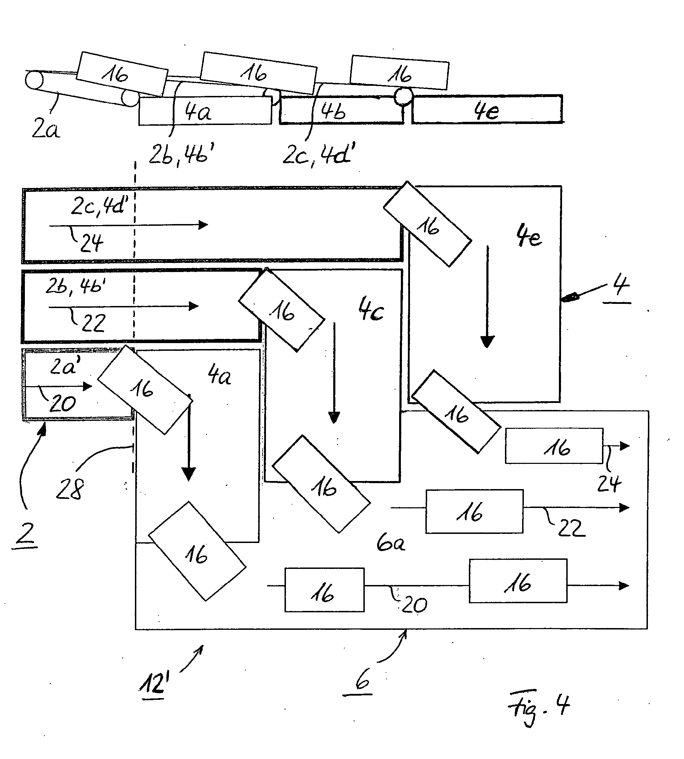

Zur Unterstützung dieses Ziels trägt im vorliegenden Ausführungsbeispiel auch der Höhenverlauf des ersten und zweiten Förderabschnitts 2 bzw. 4 bei, welcher in den Figuren 2 und 3 schematisch in einer seitlichen Ansicht von jeweils verschiedenen Seiten der Vereinzelungsvorrichtung 12 gezeigt ist. Dabei zeigen die Figuren 2 und 3 die Blickrichtung parallel zur vierten Förderrichtung f4 bzw. antiparallel zur ersten, dritten und fünften Förderrichtung f1, f3, f5. Der erste Förderabschnitt 2 mit dem Förderband 2a steigt dabei leicht an, so dass die Stückgüter erst dann beginnen auf einem Fördermittel des zweiten Förderabschnitts 4 aufzuliegen, wenn der Schwerpunkt des jeweiligen Stückguts über die mündungsseitige Kante des Förderbandes 2a hinausbewegt wird. Infolge des schwerkraftbelasteten Aufliegen wird das Stückgutteil bereits von einem Fördermittel des zweiten Förderabschnitts 4 gezogen, auch wenn noch ein Teil des Stückguts vom ersten Förderabschnitt 2 befördert wird.

Die Förderwirkung des jeweils zunächst angeordneten Förderabschnitts kann dabei unterstützt werden, indem die Reibungskoeffizienten der Förderbänder in Förderrichtung gesehen zunehmend sind. So wird ein einen Förderabschnitt verlassendes Stückgut schneller unter das Regime des jeweils nächsten Förderabschnitts gebracht und kann so infolge der auch in Förderrichtung ansteigenden Fördergeschwindigkeit schneller von benachbarten Stückgütern entzerrt werden.

Entsprechend zeigen die Figuren 2 und 3 für die Förderbänder 4a, 4c und 4e einen fallenden Verlauf, der damit dafür sorgt, dass die Stückgüter bereits mit dem ersten Auftreffen in den Wirkungskreis des dritten Förderabschnitts 6 gelangen und so im Vergleich zu einer Anordnung auf gleicher Ebene deutlich schneller auf die neue Förderrichtung, nämlich die dritte Förderrichtung f3, einschwenken und beschleunigt abgezogen werden.

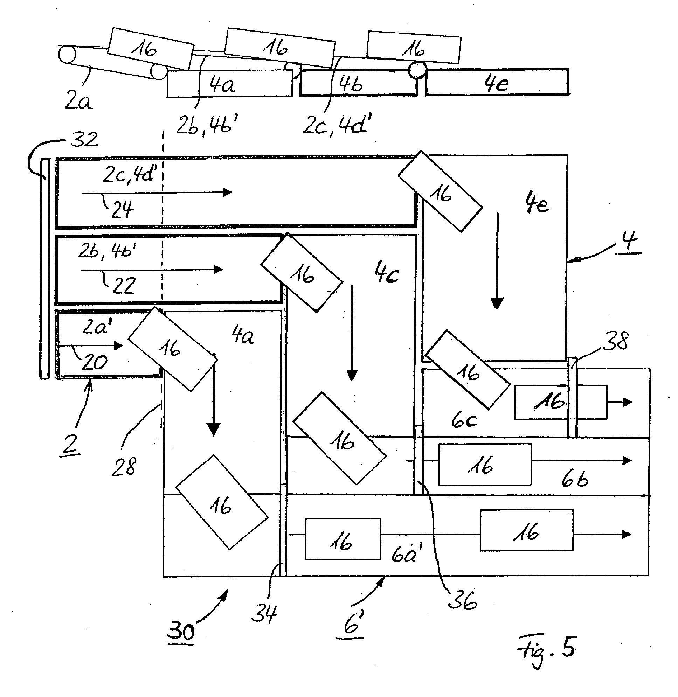

Figur 4 zeigt in schematischer Darstellung eine Aufsicht auf eine gegenüber Figur 1 geringfügig modizierte Vereinzelungsvorrichtung 12' mit zugehörigem Höhenprofil. Bei dieser Ausführungsvariante sind der erste Förderabschnitt 2 und der zweite Förderabschnitt 4 verschmolzen. Die vormals vorhandene Grenze zwischen diesen beiden Förderabschnitten 2, 4 ist durch eine gestrichelte Linie 28 symbolisiert. Neu ist bei dieser Variante, dass der erste Förderabschnitt 2 bereits drei unterschiedliche Förderbänder 2a', 2b, 2c aufweist, die eine Unterteilung des ursprünglichen Stückgutstroms 19 in die drei bereits bekannten Teilströme 20, 22, 24 vorsieht. Entsprechend stellen die Förderbänder 2b und 2c mit ihrer Verlängerung in den zweiten Förderabschnitt 4 hinein zugleich die Förderbänder 4b' und 4d' des zweiten Förderabschnitts 4 dar.

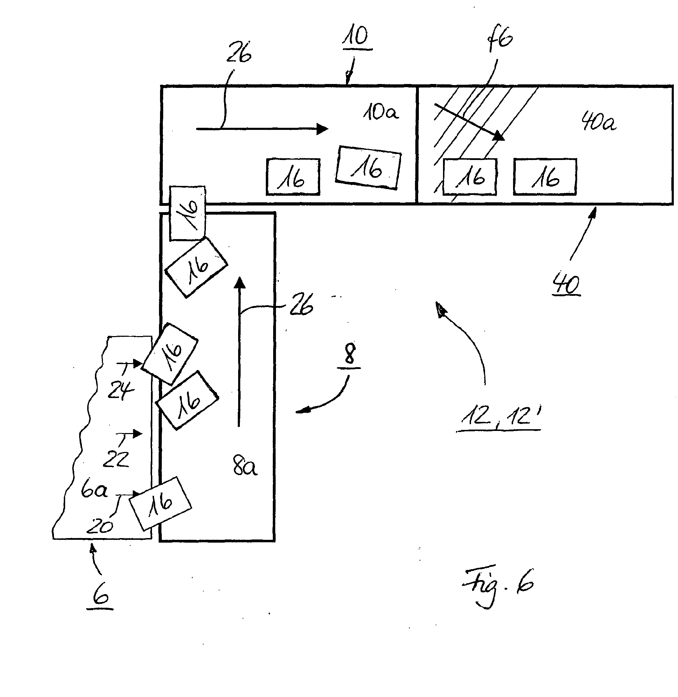

Mit der Figur 5 wird in schematischer Darstellung eine weitere Variante für eine Vereinzelungsvorrichtung 30 dargestellt, die auf der Vereinzelungsvorrichtung 12' gemäss Figur 4 aufbaut und einen modifizierten dritten Förderabschnitt 6' und zusätzlich Lichtschranken 32 bis 38 aufweist. Dabei ist der dritte Förderabschnitt 6' nun auch mit drei Förderbändern 6a', 6b und 6c ausgerüstet, so dass die Teilströme 20, 22 und 24 auch auf diesem Abschnitt separat gefördert und ggfs. beschleunigt oder abgebremst werden können. Die Vereinzelung der Stückgüter 16 wird dabei durch die Lichtschranken 32 bis 38 insofern unterstützt, als die Stückgüter 16 bereits nach dem Passieren der in Förderrichtung zuerst angeordneten Lichtschranke 32 auf ihren jeweiligen Förderbändern 2a', 2b und 2c erfasst und im weiteren Verlauf der Vereinzelungsvorrichtung 30 disponiert werden können. Diese Disposition kann einerseits darin bestehen, bereits die Förderbänder 2a', 2b und 2c separat zu beschleunigen oder zu verzögern. Je nach der Auslegung der Vereinzelungsvorrichtung 30 kann dabei sogar ganz auf die weiteren Lichtschranken 34, 36 und 38 verzichtet werden. Andererseits kann diese Disposition auch erst später mit einem separaten Beschleunigen oder Verzögern der Förderbänder 6a', 6b und 6c vorgenommen werden, was dabei im wesentlichen durch die den einzelnen Förderbändern 6a', 6b und 6c zugeordneten Lichtschranken 34, 36 und 38 unterstützt wird. Es sei ergänzend angemerkt, dass die Lichtschranken 32 bis 38 nicht nur im klassischen Sinne für die Erkennung einen Stückguteintritts und -austritts ausgestaltet sein können, sondern es kann auch zugleich die Überdeckung durch das Stückgut erfasst werden, womit zusätzlich auch die Längs- und Breitenabmessungen des Stückguts erfasst werden können.

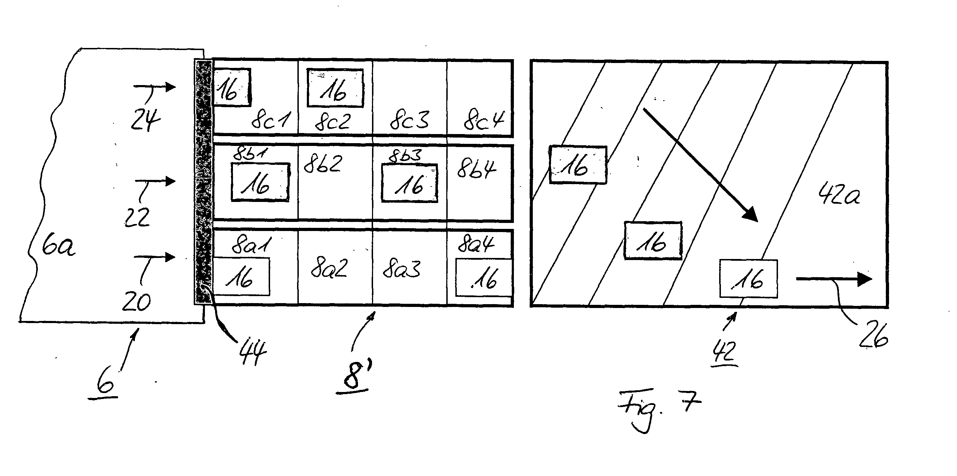

Figur 6 zeigt anhand der schematischer Darstellung eine Aufsicht auf einen Ausschnitt aus den Vereinzelungsvorrichtungen 12, 12', die hier einen zusätzlichen sechsten Förderabschnitt 40 als Endabschnitt aufweisen. Dieser sechste Förderabschnitt 40 umfasst ein Förderband 40a, das mit angetriebenen Querrollen eine leichte Querbewegung der Stückgüter 16 auf die in der zeichnerischen Darstellung untere Kante des Förderbandes 40a hin bewirkt. Mit Verlassen dieses sechsten Förderabschnitts 40 sind die Stückgüter 16 dann nicht nur vereinzelt, sondern liegen auch noch definiert für die nachfolgende Aufgabe auf den Sortierförderer vor.

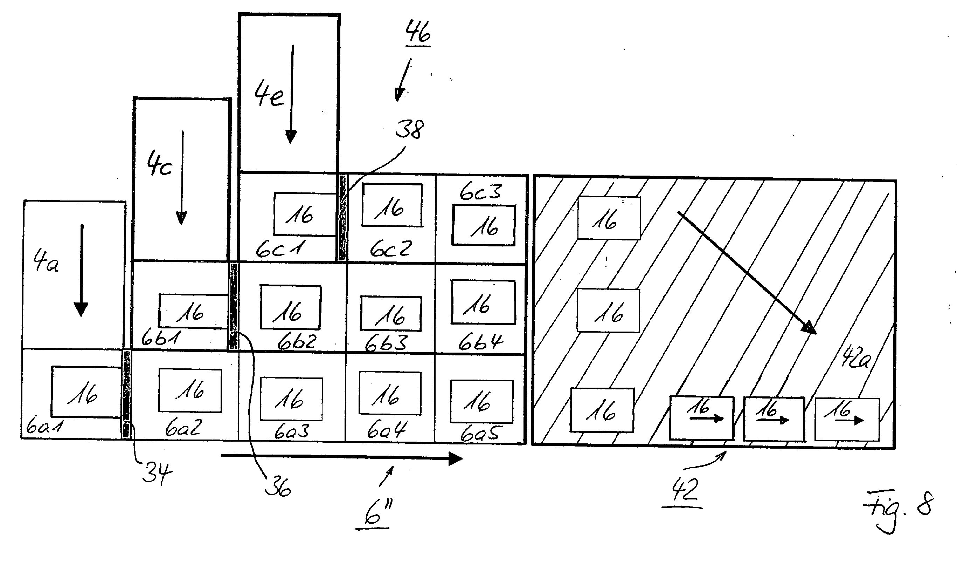

In der schematischen Darstellung nach Figur 7 ist eine Aufsicht auf die Vereinzelungsvorrichtung gemäss Figur 4 mit einem nach dem dritten Förderabschnitt 6 modifizierten weiteren vierten Förderabschnitt 8' dargestellt. Die einzelnen Teilströme 20, 22 und 24 werden dabei im vierten Förderabschnitt 8' auf jeweils vier separat antreibbaren Förderbändern 8a1 bis 8a4, 8b1 bis 8b4 und 8c1 bis 8c4 transportiert und können so im Zusammenwirken mit einer Lichtschranke 44 in sehr individueller Weise auf einen hier nachgeschalteten fünften Förderabschnitt 42 aufgegeben werden. Dabei erfolgt die Steuerung der Förderbänder 8a1 bis 8a4, 8b1 bis 8b4 und 8c1 bis 8c4 so, dass unter Berücksichtigung der Zeitdauer für die auf dem fünften Förderabschnitt 42 vorgenommene Querbewegung die Stückgüter so auf den fünften Förderabschnitt 42 aufgegeben werden, dass sie am Ende des fünften Förderabschnitts 42 hintereinander aufgereiht und an der in der zeichnerischen Darstellung unteren Kante anliegend sind.

Im vorliegende Ausführungsbeispiel weist der vierte Förderabschnitt 8' für jeden Teilstrom 20, 22, 24 jeweils vier einzeln ansteuerbare Förderbänder auf. Es sei angemerkt, dass auch ein einziges beschleunigbares oder verzögerbares Förderband ausreichend sein kann. Ebenso ist eine Unterteilung in zwei oder eine andere an die speziellen Verhältnisse angepasste Aufteilung möglich.

Eine an die Darstellung nach Figur 5 anknüpfende Ausgestaltung einer weiteren Variante für eine Vereinzelungsvorrichtung 46 zeigt die schematische Aufsicht gemäss Figur 8. Bei dieser Variante ist ein modifizierter dritter Abschnitt 6'' vorgesehen, der für die einzelnen Teilströme 20, 22 und 24 separate antreibbare Förderbänder 6a1 bis 6a5, 6b1 bis 6b4 und 6c1 bis 6c3 umfasst und so den in Figur 5 noch verwendeteten dritten Förderabschnitt 6 einspart.

Zusammenfassend darf daher die Erkenntnis gewonnen werden, dass es im Rahmen der zur Verfügung stehenden Mittel und des zur Verfügung stehenden Raumes sehr unterschiedliche, eher einfachere oder auch eher komplexere Vereinzelungsvorrichtungen geben kann. Grundsätzlich ist es jedoch bei allen dieser Vereinzelungsvorrichtungen so, dass am Ende des zweiten Förderabschnitts 4 eine andere als die ursprüngliche Förderrichtung vorliegt und der anfängliche ungeteilte chaotische Strom 19 in einen mindestens zweiteiligen Stom, d.h. in umlenkungsnähere und umlenkungsfernere Teilströme, hier die Teilströme 20, 22 und 24, unterteilt ist. Auf diese Weise ist bereits am Ende des zweiten Förderabschnitts 4 eine signifikante Entzerrung des ursprünglich chaotischen Stückgutstrom 19 erzielt.

## Patentansprüche

1. Vorrichtung (12, 12', 30, 48) zur Vereinzelung von einem mit zufälliger Verteilung auf einem ersten Förderabschnitt (2) in einer ersten Förderrichtung (f1) herangeführten Strom (19) von Stückgütern (14, 16, 18),
**dadurch gekennzeichnet, dass**
dem ersten Förderabschnitt (2) ein zweiter Förderabschnitt (4) mit folgenden Eigenschaften nachgeschaltet ist:
a) der Strom (19) von Stückgütern (14, 16, 18) ist mittels des zweiten Förderabschnitts (4) umlenkbar und folgt spätestens am Ende des zweiten Förderabschnitts (4) einer zweiten Förderrichtung (f2), die in einem ersten Winkel zur ersten Förderrichtung (f1) verläuft;
b) der Strom (19) von Stückgütern (14, 16, 18) ist im zweiten Förderabschnitt (4) in einen von der Lage der Stückgüter (14, 16, 18) am Ende des ersten Förderabschnitts (2) abhängigen mindestens zweiteiligen Strom (20, 22, 24), d.h. mindestens in einen umlenkungsnahen Teilstrom (20) und einen umlenkungsfernen Teilstrom (24), unterteilbar;
c) der umlenkungsnahe Teilstrom (20) ist mit einem ersten Fördermittel (4a), welches eine erste Breite und eine erste Länge aufweist und in zweiter Förderrichtung (f2) fördert, förderbar; und
d) der umlenkungsferne Teilstrom (24) ist mit einem zweiten Fördermittel (4b), dessen Länge etwa der ersten Breite des ersten Fördermittels (4a) entspricht und in erster Förderrichtung (f1) fördert, und anschliessend mit einem dritten Fördermittel (4c), dessen Länge und Breite etwa der ersten Länge und der ersten Breite des ersten Fördermittels (4a) entspricht und in zweiter Förderrichtung (f2) fördert, förderbar.

2. Vorrichtung nach Anspruch 1,
**dadurch gekennzeichnet, dass**
der erste Förderabschnitt (2) ein Transportband (2a) umfasst, welches in erster Förderrichtung (f1) gesehen aufsteigend verläuft.

3. Vorrichtung nach Anspruch 1 oder 2,
**dadurch gekennzeichnet, dass**
die Fördermittel des zweiten Förderabschnitts (4), welche in Richtung der zweiten Förderrichtung (f2) fördern, in zweiter Förderrichtung (f2) gesehen abfallend verlaufen.

4. Vorrichtung nach einem der Ansprüche 1 bis 3,
**dadurch gekennzeichnet, dass**
die verschiedenen Fördermittel mit unterschiedlichen Geschwindigkeiten fördern, wobei die Geschwindigkeiten vorzugsweise in Förderrichtung gesehen zunehmend ist.

5. Vorrichtung nach einem der Ansprüche 1 bis 4,
**dadurch gekennzeichnet, dass**
dem zweiten Förderabschnitt (4) ein dritter Förderabschnitt (6) nachgeschaltet ist, welcher Fördermittel (6a, 6a', 6b, 6c, 6a1 bis 6a5, 6b1 bis 6b4, 6c1 bis 6c3) aufweist, die den mindestens zweiteiligen Strom (20, 22, 24) der Stückgüter (14, 16, 18) aufnehmen und in einer dritten Förderrichtung (f3), die im Winkel zur zweiten Förderrichtung (f2) verläuft, fördern.

6. Vorrichtung nach Anspruch 5,
**dadurch gekennzeichnet, dass**
die Fördermittel (6a, 6a', 6b, 6c, 6a1 bis 6a5, 6b1 bis 6b4, 6c1 bis 6c3) des dritten Förderabschnitts (6) mit einer gegenüber dem zweiten Förderabschnitt (4) erhöhten Geschwindigkeit fördern.

7. Vorrichtung nach Anspruch 5 oder 6,
**dadurch gekennzeichnet, dass**
die Fördermittel (6a, 6a', 6b, 6c, 6a1 bis 6a5, 6b1 bis 6b4, 6c1 bis 6c3) des dritten Förderabschnitts (6) eine der Anzahl der Teilströme (20, 22, 24) entsprechende Anzahl von separaten Fördermitteln (6a', 6b, 6c, 6a1 bis 6a5, 6b1 bis 6b4, 6c1 bis 6c3) zur separaten Förderung der Teilströme (20, 22, 24) aufweisen.

8. Vorrichtung nach Anspruch 7,
**dadurch gekennzeichnet, dass**
die separaten Fördermittel (6a', 6b, 6c, 6a1 bis 6a5, 6b1 bis 6b4, 6c1 bis 6c3) über Steuermittel verfügen, mittels derer die separaten Fördermittel (6a', 6b, 6c, 6a1 bis 6a5, 6b1 bis 6b4, 6c1 bis 6c3) individuell antreibbar sind.

9. Vorrichtung nach Anspruch 8,
**dadurch gekennzeichnet, dass**
die separaten Fördermittel (6a1 bis 6a5, 6b1 bis 6b4, 6c1 bis 6c3) jeweils in mindestens zwei Abschnitte unterteilt sind, die jeweils individuell antreibbar sind.

10. Vorrichtung nach einem der Ansprüche 5 bis 9,
**dadurch gekennzeichnet, dass**
dem dritten Förderabschnitt (6) ein vierter Förderabschnitt (42) nachgeschaltet ist, der im wesentlichen in gleicher Förderrichtung wie die dritte Förderrichtung (f3) fördert, und über einen Querantrieb verfügt, der die über die Breite des vierten Förderabschnitts (42) verteilt zugeführten Stückgüter (16) zu einer Seitenkante des vierten Förderabschnitts (42) fördert.

11. Vorrichtung nach einem der Ansprüche 5 bis 9,
**dadurch gekennzeichnet, dass**
dem dritten Förderabschnitt (6) ein vierter Förderabschnitt (8) nachgeschaltet ist, der in einer vierten Förderrichtung (f4), die im Winkel zur dritten Förderrichtung (f3) verläuft, fördert.

12. Vorrichtung nach Anspruch 10 oder 11,
**dadurch gekennzeichnet, dass**
die Fördergeschwindigkeit im vierten Förderabschnitt (8, 42) gegenüber dem dritten Förderabschnitt mindestens gleich oder höher ist.

13. Vorrichtung nach einem der Ansprüche 10 bis 12,
**dadurch gekennzeichnet, dass**
dem vierten Förderabschnitt (8) ein fünfter Förderabschnitt (10) nachgeschaltet ist, der in einer fünften Förderrichtung (f5), die im Winkel zur vierten Förderrichtung (f4) verläuft, fördert.

14. Vorrichtung nach Anspruch 13,
**dadurch gekennzeichnet, dass**
die Fördergeschwindigkeit im fünften Förderabschnitt gegenüber dem vierten Förderabschnitt mindestens gleich oder höher ist.

15. Vorrichtung nach einem der Ansprüche 1 bis 14,
**dadurch gekennzeichnet, dass**
die Reibungskoeffizienten der in den Förderabschnitten eingesetzten Fördermittel von Förderabschnitt zu Förderabschnitt zumindest gleichbleibend und vorzugsweise eher zunehmend sind.

16. Verfahren zur Vereinzelung von einem mit zufälliger Verteilung auf einem ersten Förderabschnitt (2) in einer ersten Förderrichtung (f1) herangeführten Strom (19) von Stückgütern (14, 16, 18),
**dadurch gekennzeichnet, dass**
a) der auf dem ersten Förderabschnitt (2) herangeführte Strom (19) von Stückgütern (14, 16, 18) auf einem zweiten Förderabschnitt (4) umgelenkt wird und spätestens am Ende des zweiten Förderabschnitts (4) in einer zweiten Förderrichtung (f2), die in einem ersten Winkel zur ersten Förderrichtung (f1) verläuft, gefördert wird;
b) der Strom (19) von Stückgütern (14, 16, 18) wird im zweiten Förderabschnitt (4) in einen von der Lage der Stückgüter (14, 16, 18) am Ende des ersten Förderabschnitts (2) abhängigen mindestens zweiteiligen Strom (20, 22, 24), d.h. mindestens in einen umlenkungsnahen Teilstrom (20) und einen umlenkungsfernen Teilstrom (24), unterteilt;
c) der umlenkungsnahe Teilstrom (20) wird auf einer Innenbahn in die zweite Förderrichtung (f2) gefördert; und
d) der umlenkungsferne Teilstrom (24) wird auf einer die Innenbahn umgebenden Aussenbahn in am Ende zweiter Förderrichtung (f2) gefördert, wobei der Anteil der vektoriellen Förderung auf der Aussenbahn in Richtung der zweiten Förderrichtung (f2) in etwa gleich dem Anteil auf der Innenbahn ist.
